# EUROPEAN PATENT SPECIFICATION

(11) **EP 1 655 112 B1**
(45) Date of publication and mention of the grant of the patent: **13.06.2007**
(21) Application number: 05002512.1
(22) Date of filing: 07.02.2005
(51) Int. Cl.: B25H 3/00, F16B 21/08, A47F 5/00, B25H 3/04, B65D 73/00

(54) **Socket connecting structure**
Steckverbindung
Raccord a emboitement

(43) Date of publication of application: 10.05.2006
(73) Proprietor: Lea Way Hand Tool Corporation, Nantun Dist. Taichung, 408 (TW)
(72) Inventor: Tuan Mu, Hsien-Chung, Taichung, 408 Taiwan R.O.C. (TW); Tsai, Sammy, Taichung, 408 Taiwan R.O.C. (TW)
(74) Representative: Viering, Jentschura & Partner

(56) References cited:
- US-A- 6 032 797
- US-A- 6 092 655
- US-B1- 6 168 018
- US-B1- 6 273 255

## Description

### BACKGROUND OF THE INVENTION

### 1. Field of the Invention

The present invention relates to a socket connecting structure according to the preamble of claim 1.

### 2. Description of Related Art

As well known, the socket is attached to the socket rack due to a friction force between the socket and the socket rack. Consequently, the connection between the socket and the socket rack may be weakened and extremely, the socket may be detached from the socket rack when the socket rack is worn out.

A connecting structure of the initially-mentioned type is known, e.g., from US-A-6 092 655.

The present invention has arisen to mitigate and/or obviate the disadvantages of the conventional socket connecting structure.

### SUMMARY OF THE INVENTION

The main objective of the present invention is to provide an improved socket connecting structure that has a lengthened use life.

To achieve the objective, the socket connecting structure in accordance with the present invention comprises the features of claim 1 and particularly a connecting portion disposed on a suspension element and a stub extending from the connecting portion, wherein the stub is connected to a socket. The stub has a resilient stick formed on one side thereof and a spring formed within the stub. The spring has one end connected to an inner periphery of the stub and abuts a back of the resilient stick to provide a thrust to the resilient stick for connecting the socket when the resilient stick is worn out.

Further benefits and advantages of the present invention will become apparent after a careful reading of the detailed description with appropriate reference to the accompanying drawings.

### BRIEF DESCRIPTION OF THE DRAWINGS

Fig. 1 is an exploded perspective schematic view of a socket connecting structure in accordance with the present invention;
Fig. 2 is a perspective view of the socket connecting structure in accordance with the present invention;
Fig. 3 is an operational view in cross-section of the socket connecting structure in Fig. 2;
Fig. 4 is a second operational view of the socket connecting structure of the present invention when the socket is arranged to a right position; and
Fig. 5 is a perspective view of a second embodiment of the socket connecting structure in accordance with the present invention.

### DETAILED DESCRIPTION OF THE INVENTION

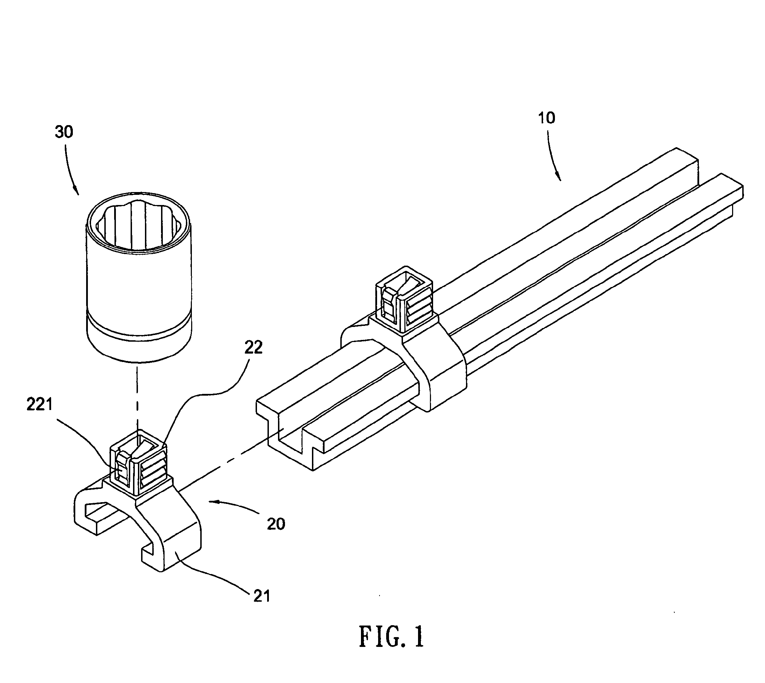

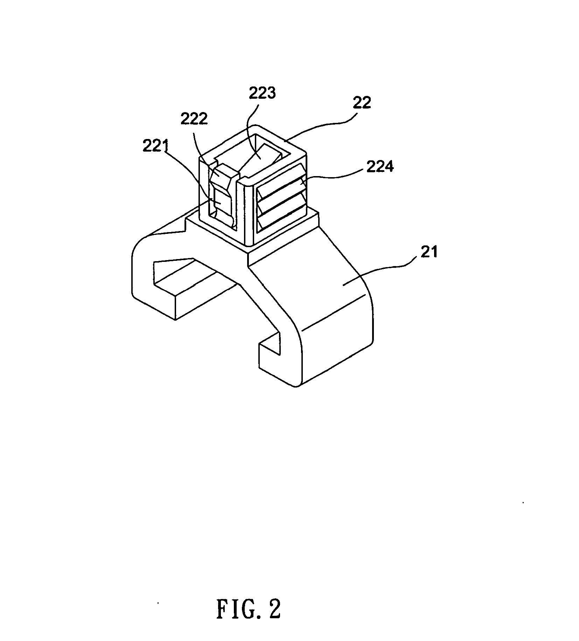

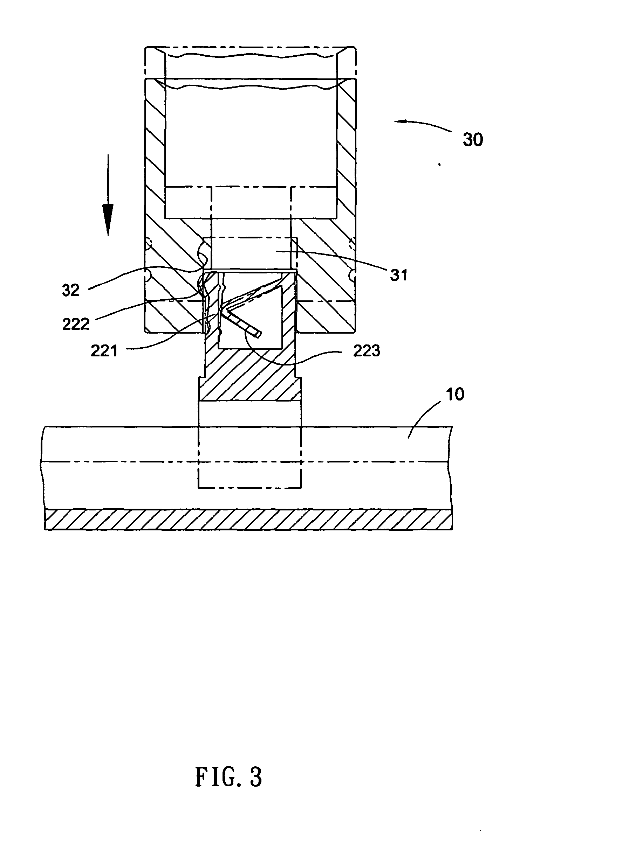

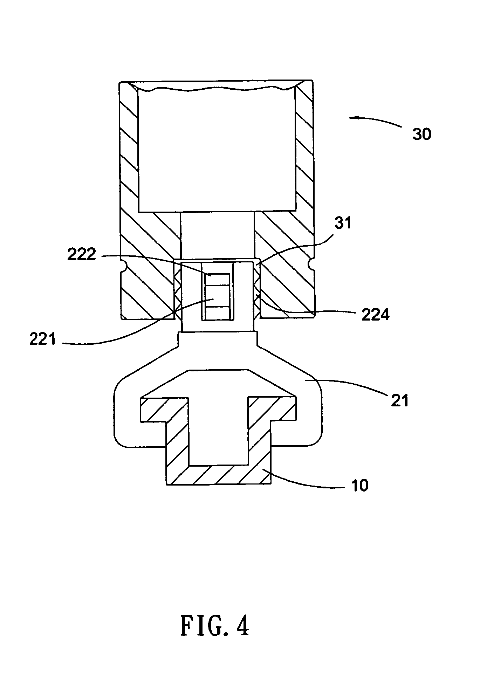

Referring to the drawings and initially to Figs. 1-4, a socket connecting structure in accordance with the present invention comprises a connecting portion (21) slidably mounted on a suspension rack (10) and a stub (22) extending from the connecting portion (21). The stub (22) is adapted to be connected to a socket. The connecting portion (21) has a dove-tail structure.

The stub (22) has a hollow structure and a resilient stick (221) formed on one side of the stub (22). The resilient stick (221) has a boss (222) formed on a free end thereof opposite to the connecting portion (21). A spring (223) is formed within the stub (22). The spring (223) has one end connected to an inner periphery of the stub (22) and abuts a back of the resilient stick (221). At least one side of the stub (22) adjacent to the resilient stick (221) has a teethed structure (224) formed thereon for promoting the friction between the socket (30) and the stub (22).

When mounting the socket (30) to the stub (22) of the present invention, the inner periphery of a cubic hole (31), which is defined in one end of the socket (30), inward pushes the resilient stick (221) to compress the spring (223) due to the boss (222). The boss (222) is received in an indentation (32) that is defined in the inner periphery of the cubic hole (31) of the socket to hold the socket in place when the socket (30) is moved to the specific location. The restitution force of the spring (223) provides a thrust to the resilient stick (221) for connecting the socket when the boss (222) of the resilient stick (221) is worn out.

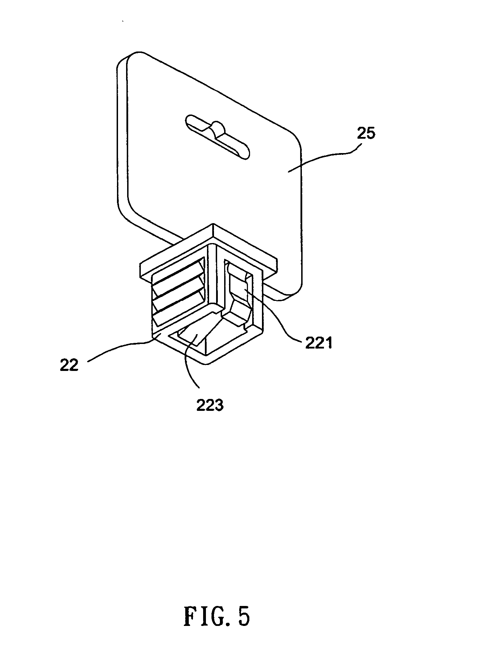

With reference to Fig. 5 that shows a second embodiment of the socket connecting structure in accordance with the present invention, the connecting portion (21) is altered to be a suspension card (25) and the stub (22) is connected to a lower portion of the suspension card (25). Consequently, the socket (30) can be displayed in a market when being connected to the stub (22).

Although the invention has been explained in relation to its preferred embodiment, it is to be understood that many other possible modifications and variations can be made without departing from the scope of the invention as hereinafter claimed.

## Claims

1. Socket connecting structure comprising a connecting portion (21) adapted to be disposed on a suspension element (10) and a stub (22) extending from the connecting portion (21), wherein the stub (22) is adapted to be connected to a socket (30), the stub (22) having a resilient stick (221) formed on one side thereof and a spring (223) formed within the stub, the spring (223) having one end connected to an inner periphery of the stub (22) and abuts a back of the resilient stick (221) to provide a thrust to the resilient stick (221) for connecting the socket (30) when the resilient stick (221) is worn out,
**characterized in that**
at least one side of the stub (22) adjacent to the resilient stick (221) has a teethed structure (224) formed thereon for promoting the friction between the socket (30) and the stub (22).

2. Socket connecting structure as claimed in claim 1, wherein the connecting portion (21) has a dove-tail structure and adapted to be slidably mounted on a suspension rack.

3. Socket connecting structure as claimed in one the claims 1 or 2, wherein the connecting portion (21) is adapted to be formed with a suspension card (25) for displaying the socket (30).

## Patentansprüche

1. Sockel-Verbindungsstruktur aufweisend: einen Verbindungsabschnitt (21), der zur Anordnung an einem Lagerelement (10) geeignet ist, und einen Stutzen (22), der sich von dem Verbindungsabschnitt (21) aus erstreckt, wobei der Stutzen (22) zur Verbindung mit einem Sockel (30) geeignet ist, wobei der Stutzen (22) einen auf einer Seite desselben gebildeten nachgiebigen Stab (221) und eine innerhalb des Stutzens gebildete Feder (223) aufweist, wobei die Feder (223) ein Ende hat, das mit einer Innenfläche des Stutzens (22) verbunden ist und die an einer Rückseite des nachgiebigen Stabs (221) zur Ausübung eines Druckes auf den nachgiebigen Stab (221) zur Verbindung des Sockels (30) anliegt, wenn der nachgiebige Stab (221) ausgeleiert ist,
**dadurch gekennzeichnet, dass**
zumindest eine Seite des Stutzens (22) neben dem nachgiebigen Stab (221) eine Zahnstruktur (224) aufweist, die auf dieser zur Unterstützung der Reibung zwischen dem Sockel (30) und dem Stutzen (22) gebildet ist.

2. Sockel-Verbindungsstruktur nach Anspruch 1, wobei der Verbindungsabschnitt (21) eine Schwalbenschwanz-Struktur hat und zur gleitfähigen Montage auf einem Lagergestell geeignet ist.

3. Sockel-verbindungsstruktur nach einem der Ansprüche 1 oder 2, wobei der Verbindungsabschnitt (21) geeignet ist, um mit einer Lagerkarte (25) zur Ausstellung des Sockels (30) gebildet zu werden.

## Revendications

1. Raccord à emboîtement comprenant une partie de raccord (21) adaptée pour être disposée sur un élément de suspension (10), et une embase (22) s'étendant depuis la partie de raccord (21), dans lequel l'embase (22) est adaptée pour être raccordée à une douille (30), l'embase (22) ayant un tenon résistant (221) ménagé sur un côté de celle-ci et un ressort (223) ménagé à l'intérieur de l'embase, le ressort (223) ayant une extrémité raccordée à une périphérie intérieure de l'embase (22) et étant en butée contre une partie arrière du tenon résistant (221) de façon à imprimer une poussée au tenon résistant (221) permettant de raccorder la douille (30) quand le tenon résistant (221) est usé,
**caractérisé en ce que**
au moins un côté de l'embase (22) adjacent au tenon résistant (221) a une structure dentée (224) formée sur celui-ci de façon à favoriser le frottement entre la douille (30) et l'embase (22).

2. Raccord à emboîtement selon la revendication 1, dans lequel la partie de raccord (21) possède une structure à queue d'aronde et est adaptée pour être montée de manière coulissante sur un rail de suspension.

3. Raccord à emboîtement selon l'une des revendications 1 ou 2, dans lequel la partie de raccord (21) est adaptée pour être pourvue d'une fiche de suspension (25) permettant de montrer la douille (30).
